# EUROPÄISCHE PATENTSCHRIFT

(11) **EP 2 722 370 B1**
(45) Veröffentlichungstag und Bekanntmachung des Hinweises auf die Patenterteilung: **28.05.2014**
(21) Anmeldenummer: 12007180.8
(22) Anmeldetag: 17.10.2012
(51) Int. Cl.: C09D 1/00

(54) **Photokatalytische Beschichtungen mit Füllstoffen**
Photocatalytic coatings with fillers
Revêtements photocatalytiques avec matières de remplissage

(43) Veröffentlichungstag der Anmeldung: 23.04.2014
(73) Patentinhaber: STO SE & Co. KGaA, 79780 Stühlingen (DE)
(72) Erfinder: Burgeth, Gerald, 79787 Lauchringen (DE); Baindl, Andreas, 78247 Hilzingen (DE); Burger, Marianne, 79780 Stühlingen (DE)
(74) Vertreter: Gottschalk, Matthias

(56) Entgegenhaltungen:
- WO-A1-2009/027432
- WO-A1-2010/029596
- DE-A1-102004 054 048
- JP-A- 2002 146 293
- JP-A- 2002 226 709
- US-A1- 2009 163 656

## Beschreibung

Die vorliegende Erfindung betrifft photokatalytische Beschichtungsmaterialien. Insbesondere betrifft die vorliegende Erfindung ein Beschichtungsmaterial, umfassend mindestens ein organisches Bindemittel, mindestens ein anorganisches photokatalytisch wirksames Mittel und BaSO₄ als funktionellen Füllstoff. Die Erfindung betrifft auch die Verwendung derartiger Beschichtungsmaterialien zum Abbau von in Atmosphärenluft enthaltenen Schadgasen. Ferner betrifft die Erfindung die Verwendung von BaSO₄ als funktionellem Füllstoff zur Steigerung der Aktivität eines photokatalytisch wirksamen Mittels in einem Beschichtungsmaterial.

### Hintergrund der Erfindung

Photokatalytische Beschichtungen von Oberflächen, insbesondere von Aussenfassaden von Bauten, sind Beschichtungen, welche einen Photokatalysator enthalten, dessen Aktivität bestimmte Eigenschaften der Beschichtung beeinflussen kann. So werden derartige Beschichtungen zur Erzeugung einer selbstreinigenden Oberfläche verwendet, oder sie dienen dem Abbau von Schadgasen aus der Umgebungsluft.

Photokatalytische Beschichtungen sind im Stand der Technik bekannt. Beispielsweise beschreibt die EP 1 735 372 ein Beschichtungsmaterial mit einem Bindemittel und mindestens einem Teilchen mit einer Größe und/oder Oberflächenrauhigkeit von 100 µm oder weniger aufweisenden Füllstoff sowie einem photokatalytisch wirksamen Mittel, wobei das Bindemittel zumindest teilweise durch die photokatalytische Wirkung abgebaut wird und eine mikrostrukturierte, selbstreinigende Oberfläche entsteht.

EP 1 753 831 beschreibt Beschichtungsmaterialien mit einem Bindemittel und einem Photokatalysator aus TiO₂, das mit Kohlenstoff und oder Schwefel oberflächenmodifiziert ist und dadurch auch mit sichtbarem Licht photokatalytisch aktiv ist. Die Beschichtung zeigt Aktivität gegen mikrobiellen Bewuchs.

Die deutsche Gebrauchsmusterschrift DE 203 06 431 beschreibt eine Photokatalysator-haltige Beschichtungsmasse, die zementfrei ist und eine Calciumsulfat-Komponente beinhaltet. Das Calciumsulfat ist hier als Bindemittelbestandteil zu betrachten. Solche Beschichtungen sind als photokatalytische Gips-Putze bekannt, können jedoch wegen der niedrigen Witterungsbeständigkeit nicht im Außenbereich eingesetzt werden, da CaSO₄ als das verwendete Bindemittel dafür zu wenig "Bindekraft" hat und zu stark wasserlöslich ist.

Im Stand der Technik ist allgemein das Vorurteil verbreitet, dass photokatalytische Beschichtungsmassen nicht organisch, auf Basis von Polymerdispersionen gebunden sein dürfen, sondern rein mineralisch, anorganisch - beispielsweise auf Basis von Wasserglas - gebunden sein müssen. Dieses Vorurteil ist oft in der Literatur zu finden, wie beispielsweise in Absatz [0007] der EP 1 809 707 B1:
"Problematisch an der Verwendung photokatalytisch aktiver Pigmente, insbesondere des kostengünstigen Anatas in Beschichtungsmassen, welche organische Bindemittel enthalten, ist, dass das organische Bindemittel, in der Regel eine polymere Verbindung, durch die photokatalytischen Effekte angegriffen und dabei das organische Bindemittel abgebaut wird. Als Folge dieses Prozesses werden Pigment- und Füllstoffpartikel an der Oberfläche der Beschichtungsmasse freigelegt, was zum unerwünschten Phänomen der sogenannten Kreidung führt (siehe hierzu R. Benedix et al., Lacer No. 5, 2000, Seite 161 sowie R. Baumstark und M. Schwanz, Dispersionen für Bautenfarben, Acrylatsysteme in Theorie und Praxis, Seite 64, Curt R. Vincentz Verlag, Hannover, 2001). Auch ist bekannt, dass diese Beschichtungsmassen verstärkt zu Vergilbungsreaktionen neigen. Diese Effekte verhindern bislang den Einsatz organischer Bindemittel in diesem Arbeitsgebiet und erfordern die Verwendung von rein anorganischen Bindemitteln, wie beispielsweise Wasserglas, die keinem solchen Abbau unterliegen [siehe beispielsweise die japanische Patentanmeldung mit der Anmeldenummer 10-309419 (Nippon Paint Co. Ltd.)]."

Als Alternative zu organischen Bindemitteln werden silikatische Bindemittel in Betracht gezogen. Silikatische Bindemittel können nicht weiter oxidiert werden, da sich Si bereits in der Oxidationsstufe IV befindet. Da jedoch bei der Photokatalyse sehr nukleophile und siliciumphile Sauerstoff-Spezies (wie OH-Radikale oder O²⁻, etc.) entstehen, werden die Si-O-Si-Bindungen sehr schnell angegriffen. Es kommt zu nukleophilen Substitutionsreaktionen, und das Silikat-Netzwerk wird zerstört. Die Folge ist eine massive Photokorrosion der gesamten Bindemittelmatrix. Chemisch zu vergleichen sind diese Vorgänge mit einem alkalischen Aufschluss von Silikaten. Um dieser Photokorrosion entgegen zu wirken, setzen die Hersteller solcher silikatischen Beschichtungsmassen oft einfach weniger TiO₂ als Photokatalysator ein, mit der Folge, dass die photokatalytische Aktivität dieser Beschichtungen insgesamt sehr schlecht ist. Hinzu kommt, dass das Wasserglas noch sehr gut an das TiO₂ bindet, so dass unter Umständen das TiO₂-Katalysatorpartikel beschichtet und eingekapselt wird. Dies führt zu einer weiteren Minderung der photokatalytischen Aktivität. Ein derartiges Beschichten von TiO₂ mit Silikaten wird auch gezielt eingesetzt, um pigmentäres TiO₂ zu "stabilisieren" und so dessen photokatalytische Wirksamkeit zu vermindern. Die hier unerwünschte photokatalytische Aktivität wird durch das Behandeln mit Silikat unterdrückt.

Als weitere Alternative zu organischen Bindemittel kommen zementgebundene Beschichtungsmaterialien in Betracht. Zementgebundene Beschichtungsmassen, die in der Regel dickschichtig aufgebracht werden, zeigen üblicherweise ebenfalls geringe photokatalytische Aktivität, da meist nur sehr wenig des teuren Rohstoffs TiO₂ eingesetzt wird. Der größte Anteil des Photokatalysators verschwindet in der Tiefe der Beschichtung und ist für photokatalytische Prozesse, die nur oberflächennah auftreten, verloren. Außerdem bildet sich durch die fortlaufende Carbonatisierung von zementösen Beschichtungsmassen eine oberflächennahe CaCO₃-Schicht, die die Photokatalyse negativ beeinträchtigt.

Generell sollten photokatalytische Beschichtungen, wenn sie zum Abbau von Schadgasen in der Umgebungsluft eingesetzt werden, derart aktiv sein, dass der Abbau der Schadgase unter den herrschenden Umweltbedingungen einer Kinetik Erster Ordnung gehorcht. Das bedeutet, dass der Transport des Schadgases an die Beschichtung der geschwindigkeitslimitierende Schritt ist und nicht die photokatalytischen Abbau-Reaktionen. Diese Aktivität wird jedoch von bekannten Systemen typischerweise nicht erreicht.

Es besteht daher ein Bedarf an einem Beschichtungsmaterial, das einerseits gegen in der Umgebungsluft enthaltenen Schadgasen eine hohe Aktivität aufweist und andererseits für eine Verwendung im Außenbereich ausreichend witterungsbeständig und langlebig ist. Der vorliegenden Erfindung liegt die Aufgabe zugrunde ein, derartiges Beschichtungsmaterial bereitzustellen.

### Zusammenfassung der Erfindung

Die vorliegende Erfindung stellt ein Beschichtungsmaterial bereit, umfassend
(a) mindestens ein organisches Bindemittel,
(b) mindestens ein photokatalytisch wirksames Mittel und
(c) BaSO₄ als funktionellen Füllstoff,
wobei der Gehalt an BaSO₄ in der Beschichtungsmasse größer oder gleich dem Gehalt an photokatalytisch wirksamen Mittel ist, und wobei das Beschichtungsmaterial vorzugsweise weitgehend frei, stärker bevorzugt frei von silikatischen Bindemitteln ist.

Die Erfinder der vorliegenden Erfindung haben entgegen der vorstehend beschriebenen Vorurteile im Stand der Technik gefunden, dass silikatische Bindemittel nicht ausreichend stabil sind für die Bereitstellung von photokatalytisch wirksamen Beschichtungsmaterialien. Einem Fachmann auf dem Gebiet von Beschichtungsmaterialien sind verschiedene silikatische Bindemittel bekannt. Einige Beispiele dafür sind vorstehend beschrieben. Insbesondere können als Beispiele für solche erfindungsgemäß ungeeignete silikatische Bindemittel können Wasserglas oder Kieselsol genannt werden. In den Beschichtungsmaterialien der vorliegenden Erfindung sind silikatische Bindemittel nicht enthalten.

Der Begriff "Bindemittel" ist hierbei wie üblicherweise im Fachgebiet verwendet zu verstehen. Ein Bindemittel ist insbesondere ein aushärtbares, z.B. vernetzbares oder kondensierbares Material, dass vor dem Aushärten in flüssiger Form vorliegt und welches in der Zusammensetzung enthaltene Feststoffe benetzt und aneinander bindet bzw. die Zusammensetzung an eine Unterlage bindet. Das Bindemittel bildet in der ausgehärteten Zusammensetzung eine zusammenhängende Matrix. Im Gegensatz dazu beschreibt der Begriff "Füllstoff" Feststoffe, welche das Volumen der Zusammensetzung erhöhen und die bereits vor dem aushärten des Bindemittels als Feststoffe vorliegen. Füllstoffteilchen liegen in der ausgehärteten Zusammensetzung im Wesentlichen voneinander isoliert vor und werden von der Bindemittelmatrix (gegebenenfalls nur teilweise) umschlossen. Herkömmliche Füllstoffe beeinflussen üblicherweise die Eigenschaften einer Zusammensetzung nicht wesentlich. Im Gegensatz dazu bezieht sich der Begriff "funktioneller Füllstoff" wie hierin verwendet auf BaSO₄, welches wie nachstehend detaillierter beschrieben einen wesentlichen Einfluss auf die photokatalytische Aktivität des in dem erfindungsgemäßen Beschichtungsmaterial enthaltenen photokatalytisch wirksamen Mittels zeigt.

Die Erfinder der vorliegenden Erfindung haben gefunden, dass mit Hilfe von BaSO₄ als Füllstoff die Aktivität des photokatalytisch wirksamen Mittels bzw. photokatalytische Effizienz des Beschichtungsmaterials gesteigert, ohne dabei auf Substanzen zurückgreifen zu müssen, die die Beschichtungszusammensetzung für den Einsatz im Außenbereich ungeeignet machen würden. Somit kann die Menge des in dem Beschichtungsmaterial erforderlichen photokatalytisch wirksamen Mittels, welches in der Regel ein hochpreisiges Material ist, bei sonst gleicher Wirksamkeit reduziert werden, oder die Gesamtaktivität der Beschichtungszusammensetzung kann durch die Verwendung eines günstig erhältlichen Füllstoffs gesteigert werden, ohne auf weiteren hochpreisigen Photokatalysator zurückgreifen zu müssen. Diese Beschichtungsmaterialien sind ferner für den Außeneinsatz geeignet.

Die erfindungsgemäßen Beschichtungsmaterialien sind geeignet zum photokatalytischen Abbau von in Atmosphärenluft enthaltenen Schadgasen, z.B. volatilen organischen Verbindungen (VOC) oder Stickoxiden, wie etwa NO und NO₂. Dabei zeigen die Beschichtungsmaterialien der Erfindung eine hohe Aktivität selbst bei Verwendung relativ geringer Mengen an photokatalytisch wirksamem Mittel. Daher betrifft die vorliegende Erfindung auch die Verwendung eines Beschichtungsmaterials wie vorstehend definiert zum Abbau von in Atmosphärenluft enthaltenen Schadgasen, insbesondere volatilen organischen Verbindungen (VOC) oder Stickoxiden, wie etwas NO oder NO₂.

Die Erfinder der vorliegenden Erfindung haben gefunden, dass organisch gebundene Beschichtungsmaterialien, die neben einem Photokatalysator auch BaSO₄ als funktionellen Füllstoff umfassen, eine hohe Wirkung gegen in Umgebungsluft enthaltene Schadgase zeigen und zudem für einen Einsatz im Außenbereich ausreichend witterungsbeständig sind.

Weitere Ausführungsformen der Erfindung sind in der folgenden Beschreibung und den angefügten Ansprüchen beschrieben.

### Detaillierte Beschreibung der Erfindung

Die vorliegende Erfindung stellt ein Beschichtungsmaterial bereit, umfassend
(a) mindestens ein organisches Bindemittel,
(b) mindestens ein photokatalytisch wirksames Mittel und
(c) BaSO₄ als funktionellem Füllstoff, wobei der Gehalt an BaSO₄ in der Beschichtungsmasse größer oder gleich dem Gehalt an photokatalytisch wirksamen Mittel ist.

Das erfindungsgemäße Beschichtungsmaterial enthält als Bindemittel ein organisches Bindemittel und kann daher in einer bevorzugten Ausführungsform weitgehend frei von silikatischen Bindemitteln bereitgestellt werden. Stärker bevorzugt ist das Beschichtungsmaterial der Erfindung frei von silikatischen Bindemitteln.

Wie vorstehend ausgeführt enthält das erfindungsgemäße Beschichtungsmaterial BaSO₄. Dabei wird Bariumsulfat als ein Füllstoff eingesetzt, der jedoch im Gegensatz zu herkömmlichen Füllstoffen die Eigenschaften der Beschichtungszusammensetzung wesentlich verändert, nämlich die Aktivität des enthaltenen photokatalytisch wirksamen Mittels erhöht, im Vergleich zu Zusammensetzungen, die anstelle von Bariumsulfat einen anderen Füllstoff enthalten. Die Erfinder der vorliegenden Erfindung haben gefunden, das Bariumsulfat als Füllstoffbestandteil eine hervorragende Verstärkungswirkung auf die Aktivität des photokatalytisch wirksamen Mittels, insbesondere bei der Zersetzung von in Umgebungsluft enthaltenen Schadgasen ausübt. Beschichtungsmaterialien, die Bariumsulfat als Füllstoffbestandteil enthalten, weisen zudem aufgrund der geringen Wasserlöslichkeit von Bariumsulfat eine hervorragende Außenbeständigkeit auf. Ferner ist Bariumsulfat insbesondere im Vergleich mit üblichen photokatalytisch wirksamen Mitteln ausgesprochen günstig erhältlich. Daher kann bei Verwendung von Füllstoffen, die Bariumsulfat erhalten, ein Beschichtungsmaterial erhalten werden, das eine hohe photokatalytische Aktivität, insbesondere gegen in Umgebungsluft enthaltenen Schadgasen aufweist, und zudem günstig und sehr gut außenbeständig ist.

Das Bariumsulfat kann beispielsweise als natürliches Bariumsulfat, als synthetisches Bariumsulfat oder als Mischfüllstoff, enthaltend mehr als 60 Gew.%, vorzugsweise mehr als 80 Gew.% BaSO₄, vorliegen. Ein BaSO₄ enthaltender Mischfüllstoff kann besielsweise ein Füllstoff sein, enthaltend Mischkristalle aus BaSO₄ und einer anderen anorganischen Verbindung, wie etwa SrSO₄, Quarz oder Fluorit.

Der BaSO₄ enthaltende Mischfüllstoff weist in einer bevorzugten Ausführungsform eine geringe Wasserlöslichkeit auf, insbesondere eine Wasserlöslichkeit von weniger als 0,1 g/l bei 20°C.

In einer weiteren Ausführungsform betrifft die vorliegende Erfindung ein Beschichtungsmaterial wie hierin definiert, welches weitgehend frei, vorzugsweise frei von carbonatischen Füllstoffen, wie etwa CaCO₃, ist.

Die vorliegenden Erfinder haben festgestellt, dass die verstärkende Wirkung BaSO₄ als funktionellem Füllstoff auf die Aktivität des photokatalytisch wirksamen Mittels nicht an eine hohe Wasserlöslichkeit des Füllstoffs gebunden ist. Ferner trägt die geringe Wasserlöslichkeit des funktionellen Füllstoffs zur Beständigkeit des Beschichtungsmaterials unter Außenbedingungen bei.

Die Erfinder der vorliegenden Erfindung haben festgestellt, dass organisch gebundene Beschichtungen, die neben einem Photokatalysator, wie etwa TiO₂, auch Bariumsulfat enthalten, eine höhere photokatalytische Aktivität aufwiesen als Beschichtungen ohne BaSO₄. Dies ist zunächst äußerst erstaunlich, da BaSO₄ aufgrund seiner Schwerlöslichkeit nur als Feststoff neben dem Photokatalysator vorliegt.

Der funktionelle Füllstoff der vorliegenden Erfindung weist vorzugsweise eine Teilchengröße von mindestens 100nm, stärker bevorzugt mindestens 500nm, noch stärker bevorzugt mindestens 1000nm auf. Teilchengrößen unterhalb von 100nm zeigen eine verstärkte Transparenz, was im Zusammenhang mit der vorliegenden Erfindung unerwünscht ist. Der funktionelle Füllstoff der vorliegenden Erfindung kann eine Teilchengröße von weniger als 1 mm aufweisen.

Das Beschichtungsmaterial der vorliegenden Erfindung kann darüber hinaus auch weitere Füllstoffe enthalten, die kein funktioneller Füllstoff in Sinne der vorliegenden Erfindung sind. Im Stand der Technik ist eine Vielzahl solcher weiteren Füllstoffe bekannt. Beispiele davon schließen Aluminiumhydroxid, Sand, Weißpigment TiO₂ (Rutil), und carbonatische oder silikatische Füllstoffe ein.

Das Beschichtungsmaterial der vorliegenden Erfindung enthält ferner als wesentlichen Bestandteil ein organisches Bindemittel. Die Witterungsbeständigkeit des erfindungsgemäßen Beschichtungsmaterials wird durch die Verwendung eines organischen Bindemittels sichergestellt. Ferner weisen organische Bindemittel im Gegensatz zu silikatischen Bindemittel eine relativ hohe photokatalytische Stabilität auf. Organische photokatalysatorhaltige Bindemittelsysteme neigen zwar aufgrund des oxidativen Abbaus der Bindemittelmatrix zu einer gewissen Kreidung, doch kann diese Kreidung gezielt gesteuert und damit ausreichend kontrolliert werden, beispielsweise durch
- die Photostabilität des Bindemittels selbst, d.h. die Auswahl eines organischen Bindemittels mit besonders geringer photochemischer Zersetzbarkeit
- die Aktivität und Menge des Photokatalysators
- Additive, die die Aktivität des Photokatalysator beeinflussen, wie etwa Fluor oder Phosphor haltige Hydrophobierungsmittel
- die "Verdünnung" des Photokatalysatorgehalts durch andere Füllstoffe, die photokatalytisch nicht aktiv sind.

Bei der Bereitstellung eines erfindungsgemäßen Beschichtungsmaterials wird daher üblicherweise ein Kompromiss zwischen der gewünschten photokatalytischen Aktivität und der Stabilität des Materials gewählt. Das Beschichtungsmaterial soll über ein normales Renovierungsintervall (typischerweise etwa 10 bis 20 Jahre) beständig sein aber auch eine zufriedenstellende photokatalytische Wirkung zeigen. Sollte die photokatalytische Wirkung einer gegebenen Zusammensetzung zu gering sein so kann diese gesteigert werden, etwa durch dir Erhöhung des Gehalts an photokatalytisch wirksamen Mittel, durch die Wahl eines aktiveren photokatalytischen Mittel, etc. Wenn die photokatalytische Wirkung einer gegebenen Zusammensetzung zu hoch ist um die Beständigkeit über ein typisches Renovierungsintervall zu gewährleisten so kann diese verringert werden, etwa indem ein stabileres Bindemittel gewählt wird oder dieses mit Hilfe von Additiven stabilisiert wird, indem die Menge oder Aktivität des photokatalytischen Mittel verringert wird, etc.

Organische Bindemittel, die für Beschichtungsmaterialien geeignet sind, sind im Stand der Technik bekannt. Das Bindemittel dient dazu, die im Beschichtungsmaterial enthaltenen Feststoffe, wie etwas das enthaltene photokatalytisch wirksame Mittel und BaSO₄ als den funktionellen Füllstoff, miteinander bzw. mit der Unterlage, auf der das Beschichtungsmaterial aufgebracht wird, zu verbinden. Gemäß der vorliegenden Erfindung werden organische Bindemittel gewählt, die eine ausreichende Photostabilität aufweisen, oder die organischen Bindemittel werden durch Zusatz geeigneter Additive, die die Aktivität des photokatalytisch wirksamen Mittels beeinflussen, stabilisiert. Derartige UV-Stabilisatoren werden typischerweise bereits von Herstellerseite zugesetzt.

In einer Ausführungsform ist das organische Bindemittel ausgewählt aus Polymerdispersionen, Redispergiermitteln, Polymerisaten oder Mischpolymerisaten. In einer stärker bevorzugten Ausführungsform ist das organische Bindemittel ausgewählt aus Epoxidharzen, Alkydharzen, Acrylharzen, Melamin/Formaldehyd-Harzen, Silikonharzen, Silanen, Polysiloxanen, Polyacrylaten, Polymethacrylaten, Polyvinylverbindungenn, Polyurethanen, Polyethern oder Polyestern und Copolymeren oder Mischungen davon. In einer noch stärker bevorzugten Ausführungsform ist das organische Bindemittel ausgewählt aus Polymerdispersionen, enthaltend Acrylate, Styrolacrylate, Vinylacetate, Vinychloride sowie Misch- und Co-Polymere davon. Die organischen Bindemittel können ein oder zweikomponentige Bindemittel, etwa ein Bindemittel aus einem vernetzbaren Polyacrylat und einem aliphatischen Polyisocyanat, sein. Die Beschichtungsmaterialien der vorliegenden Erfindung können ferner ein organisches Bindemittel oder eine Gemisch von verschiedenen organischen Bindemitteln enthalten.

Ein weiterer wesentlicher Bestandteil des Beschichtungsmaterials der vorliegenden Erfindung ist ein photokatalytisch wirksames Mittel. Photokatalytisch wirksame Mittel, wie sie in der vorliegenden Erfindung Verwendung finden, sind im Stand der Technik bekannt. Unter photokatalytisch wirksames Mittel ist in dieser Anmeldung eine photokatalytisch oder photosensibilisierend agierende Substanz zu verstehen, die unter Lichteinfluss Sauerstoff und/oder Wasser derart aktivieren kann, so dass hoch oxidative Sauerstoff-Spezies entstehen oder gebildet werden.

Das photokatalytisch wirksame Mittel kann beispielsweise ein anorganisches photokatalytisch wirksames Metalloxid oder Metallsulfid, vorzugsweise ein Metalloxid sein. Neben den erwähnten (anorganischen) Metalloxiden und -sulfiden, können auch organische Substanzen wie beispielsweise metallorganische Komplexverbindungen eingesetzt werden. Bevorzugt sind Oxide oder Sulfide (stärker bevorzugt Oxide) von Ti, Zn, Fe, Mn, Mo und/oder W, vorzugsweise mit einem Anteil von mindestens 60 Gew.%, besonders bevorzugt mindestens 80 Gew.%, insbesondere mindestens 90 Gew.%, bezogen auf die Gesamtmenge des photokatalytisch wirksamen Mittels. In einer bevorzugten Ausführungsform ist das photokatalytisch wirksame Mittel ausgewählt aus Zinksulfid, Zinkoxid und Titanoxid und Mischungen davon. Besonders bevorzugt ist das photokatalytisch wirksame Mittel TiO₂ (Anatas).

Es ist in Stand der Technik bekannt photokatalytisch wirksame Metalloxide oder Metallsulfide durch beschichten zu deaktivieren. Die photokatalytisch wirksamen Mittel der vorliegenden Erfindung weisen keine derartige deaktivierende Beschichtung auf.

Eine weitere Einstellbarkeit der katalytischen Eigenschaften und der erzeugten Abbauprodukte ist erreichbar, wenn das photokatalytisch wirksame Mittel mindestens ein Additiv, insbesondere Ion, ausgewählt aus C, N, S und/oder der aus Pt, Rh, Mn, Cr, Ru, Ni, Pd, Fe, Co, Ir, Cu, Mo, Zr, Re, Ag und Au, in Form ihrer Oxide und/oder Halogenide bestehenden Gruppe, vorzugsweise mit einem Anteil von 40 Gew. % oder weniger, besonders bevorzugt 20 Gew.-% oder weniger, insbesondere 10 Gew.-% oder weniger, und mehr als 1 Gew.-%, vorzugsweise mehr als 2,5 Gew. %, insbesondere 5 Gew. % oder mehr, bezogen auf das Gesamtgewicht des katalytisch wirksamen Mittels, aufweist. Die Behandlung eine photokatalytisch wirksamen Mittels mit einem derartigen Additiv wird auch als "Dotierung" bezeichnet. Dadurch lässt sich die katalytische Eigenschaft auch mit Wellenlängen z. B. im sichtbaren Bereich des solaren Spektrums anregen, wodurch die Funktion der Beschichtung auch auf z. B. der Sonne abgewandten Nordseiten eines Gebäudes gewährleistet ist. Zum Abbau organischer Materialien einsetzbare Photokatalysatoren sind beispielsweise in der DE 197 57 496 A1 beschrieben. Der Offenbarungsgehalt dieser Schrift wird hinsichtlich des Aufbaus und der Zusammensetzung von Photokatalysatoren hiermit durch ausdrückliche Inbezugnahme in diese Beschreibung aufgenommen.

In einer bevorzugten Ausführungsform besteht das photokatalytisch wirksame Mittel aus Titandioxid, insbesondere in amorpher und/oder teilkristalliner, Rutil- oder Anatasform, Hydraten von Titanoxiden sowie Mischformen daraus. Vorzugsweise handelt es sich dabei um mit C, N und/oder S dotiertes TiO₂.

Das erfindungsgemäße Beschichtungsmaterial enthält in einer Ausführungsform das organische Bindemittel oder ein Gemisch von mehreren organischen Bindemitteln in einer Menge von 5 Gew.% bis 50 Gew.%, bezogen auf den Gesamtfeststoffgehalt des Beschichtungsmaterials. Vorzugsweise ist das organische Bindemittel in einer Menge von 7 Gew.% bis 40 Gew.%, stärker bevorzugt 10 Gew.% bis 35 Gew.% enthalten.

Das photokatalytisch wirksame Mittel ist in einer Ausführungsform der Erfindung in einer Menge von 2 Gew.% bis 40 Gew.%, bezogen auf den Gesamtfeststoffgehalt des Beschichtungsmaterials, enthalten. Vorzugsweise ist des photokatalytisch wirksame Mittel in einer Menge von 3 Gew.% bis 30 Gew.%, stärker bevorzugt 5 Gew.% bis 25 Gew.%, noch stärker bevorzugt 5 Gew.% bis 10 Gew.% enthalten.

BaSO₄ als funktioneller Füllstoff ist in einer Ausführungsform der Erfindung in einer Menge von 2 Gew.% bis 70 Gew.%, bezogen auf den Gesamtfeststoffgehalt des Beschichtungsmaterials, enthalten. Dabei ist der Gehalt an BaSO₄ in der Beschichtungsmasse jedoch größer oder gleich dem Gehalt an photokatalytisch wirksamen Mittel. In einer bevorzugten Ausführungsform ist der funktionelle Füllstoff BaSO₄ in einer Menge von 3 Gew.% bis 60 Gew.%, vorzugsweise 5 Gew.% bis 50 Gew.%, stärker bevorzugt 5 Gew.% bis 40 Gew.% enthalten. Die im erfindungsgemäßen Beschichtungsmaterial enthaltenen Füllstoffe können vollständig aus BaSO₄ haltigem funktionellen Füllstoff wie vorstehend definiert bestehen. In einer anderen Ausführungsform werden zusätzlich auch herkömmliche Füllstoffe, die kein BaSO₄ enthalten, verwendet. In diesem Fall sind die hier genannten Obergrenzen des Gehalts an funktionellem Füllstoff vorzugsweise auch als Obergrenzen für den Gesamtfüllstoffgehalt zu verstehen, d.h. der funktionelle Füllstoff enthaltend BaSO₄ wird zu einem gewissen Teil mit herkömmlichem Füllstoff ersetzt.

In anwendungsfähiger Form vor dem Auftragen auf einen Beschichtungsgegenstand liegen die festen Bestandteile des Beschichtungsmaterials üblicherweise dispergiert in einem flüssigen Medium, z.B. Wasser vor. Typischerweise enthält das erfindungsgemäße Beschichtungsmaterial vor der Anwendung 10 Gew.% bis 50 Gew.% Wasser.

Die Beschichtungsmasse der vorliegenden Erfindung kann neben den vorstehend genannten wesentlichen Bestandteilen (organisches Bindemittel, photokatalytisch wirksames Mittel und BaSO₄) optional weitere übliche Additive enthalten, welchen einem Fachmann jeweils bekannt sind. Zu diesen Additiven zählen Netz- und Dispergiermittel, Verdicker, Entschäumer, Filmbildehilfsmittel, etc.

Gemäß der vorliegenden Erfindung ist der Gehalt an BaSO₄ als funktionellem Füllstoff in der Beschichtungsmasse größer oder gleich dem Gehalt an photokatalytisch wirksamen Mittel. In einer stärker bevorzugten Ausführungsform beträgt das Gewichtsverhältnis von BaSO₄ zu photokatalytisch wirksamen Mittel von 1:1 bis 10:1, vorzugsweise 1,2:1 bis 5:1.

Das Beschichtungsmaterial der vorliegenden Erfindung kann in verschiedenen Anwendungsformen eingesetzt werden. Beispielsweise kann das Beschichtungsmaterial als eine Anstrichfarbe, insbesondere eine Fassadenfarbe, ein Lack, eine Lasur, eine Versiegelung, ein Schutzanstrich, eine Korrosionsschutzfarbe oder ein Putz vorliegen. Das Beschichtungsmaterial der vorliegenden Erfindung eignet sich insbesondere zum Einsatz im Außenbereich, z.B. zum Streichen, Bemalen, Verputzen oder Beschichten von Gebäudeteilen, wie etwa Betonwänden, Ziegelwänden oder anderen Wänden, Gemäuern, usw.

Die vorliegende Erfindung betrifft auch die Verwendung eines erfindungsgemäßen Beschichtungsmaterials zum Abbau von in Atmosphärenluft enthaltenen Schadgasen, insbesondere volatilen organischen Verbindungen oder Stickoxiden, wie etwas NO oder NO₂. Mit einer Beschichtungszusammensetzung der Erfindung ist es nun möglich, eine kostenoptimierte Beschichtungszusammensetzung bereit zu stellen, die unter natürlichen Umweltbedingungen hinsichtlich des Abbaus von z.B. Stickoxiden vorzugsweise einer Kinetik Erster Ordnung unterliegt. Unter natürlichen Umweltbedingen ist gemeint die
- Konzentration an Stickoxiden NOₓ (NO und NO₂) (liegt in der Regel unter 100 µg/m³ Jahresmittel)
- Lichtintensität bzw. UV-A-Strahlung (liegt in der Regel zwischen 5 und 15 W/m² im Jahresmittel bezogen auf die Tagstunden)
- Rel. Luftfeuchte (liegt in der Regel zwischen 40 und 80%, Jahresmittel)

In einer bevorzugten Ausführungsform wird dabei das Beschichtungsmaterial der vorliegenden Erfindung im Außenbereich verwendet.

Die vorliegende Erfindung betrifft auch die Verwendung von BaSO₄ als funktionellem Füllstoff wie vorstehend definiert zur Steigerung der Aktivität bzw. Effizienz eines photokatalytisch wirksamen Mittels in einem Beschichtungsmaterial, insbesondere hinsichtlich des Abbaus von in Umgebungsluft enthaltenen Schadgasen.

Die vorliegende Erfindung wird im Folgenden unter Bezug auf spezielle Arbeitsbeispiele detaillierter beschrieben. Die angeführten Arbeitsbeispiele dienen lediglich der Illustration. Andere spezielle Ausführungsformen werden für den Fachmann auf Basis der vorliegenden Offenbarung offensichtlich sein.

### Beispiele

### Bestimmung der photokatalytischen Aktivität

Die photokatalytische Aktivität wurde in einem Closed-loop-Verfahren mit simultaner FTIR-Reaktionsverfolgung bestimmt. Der schematische Aufbau der verwendeten Messapparatur ist in Figur 1 gezeigt. Die Apparatur ist ein geschlossener Kreislauf, der aus folgenden Komponenten besteht:
- Reaktor (R) aus Edelstahl (Grundfläche 0,2 m x 1 m) mit einer Glasabdeckung. In den Reaktor werden die Probenkörper (Beschichtungsaufzüge auf inertem Untergrund) eingelegt.
- Leuchtkörper, Belichtungsapparatur (L)
- FTIR-Spektrometer mit Langweggasmesszelle (IR)
- regulierbare Pumpe (P) zur Zirkulation
- hochdichte Edelstahl-Verbindungsschläuche (nicht in Figur 1 gezeigt)

Die Einbringung der Schadstoffe erfolgt über ein Septum (S). Als Schadgas wurde Methanol verwendet. Methanol ist im Vergleich zu anderen Schadgasen relativ stabil. Daher ist eine gesteigerte Abbaurate von Methanol auch aussagekräftig für andere, weniger stabile Schadgase. Das Gesamtvolumen des Systems beträgt 9,51.

Zur Messung wird die Luft im geschlossenen Kreislauf im Kreis umgewälzt. Das FTIR-Spektrometer als Detektor nimmt nach Zugabe des Schadstoffs in gegebenen Zeitabständen komplette Spektren vom Bereich 4000 cm⁻¹ bis 700 cm⁻¹ auf. Aus diesen Momentaufnahmen der Zusammensetzung der Atmosphäre im System kann kontinuierlich und ohne Zeitverzögerung die Konzentration des Schadstoffs in der Gasphase bestimmt werden.
Die Belichtung erfolgt mit UV-Leuchtröhren vom Typ Philips TL 40W/05, wenn die photokatalytische Aktivität im UV-Bereich bestimmt werden soll, oder herkömmliche "Haushaltsneonröhren" vom Typ Philips Master TL-D Super 80 36W/840, wenn die photokatalytische Aktivität im sichtbaren Bereich des Lichtes bestimmt werden soll. Die genauen Intensitäten sind bei den folgenden Ausführungsbeispielen und Vergleichsbeispielen angegeben.

### Vergleichsbeispiel 1: Silikonharz-Fassadenfarbe ohne BaSO₄

| | |
|---|---|
| 29,9 Gew.% | Wasser |
| 8,2 Gew.% | Silikonharz (Feststoffgehalt: 50 Gew.%) |
| 11,0 Gew.% | Styrol-Acrylat Bindemittel (Feststoffgehalt: 50 Gew.%) |
| 10,0 Gew.% | photokatalytisches, C-modifiziertes TiO₂ (Kronos) |
| 10,0 Gew.% | Weißpigment TiO₂ |

| | |
|---|---|
| 26,9 Gew.% | Silikatische Füllstoffe |
| 4,0 Gew.% | übliche Additive (Netz- u. Dispergiermittel, Verdicker, Entschäumer, Filmbildehilfsmittel, etc.) |

### Ausführungsbeispiel 1: Silikonharz-Fassadenfarbe mit BaSO₄

| | |
|---|---|
| 29,9 Gew.% | Wasser |
| 8,2 Gew.% | Silikonharz (Feststoffgehalt: 50 Gew.%) |
| 11,0 Gew.% | Styrol-Acrylat Bindemittel (Feststoffgehalt: 50 Gew.%) |
| 10,0 Gew.% | photokatalytisches, C-modifiziertes TiO₂ (Kronos) |
| 10,0 Gew.% | BaSO₄ |
| 26,9 Gew.% | Silikatische Füllstoffe |
| 4,0 Gew.% | übliche Additive (Netz- u. Dispergiermittel, Verdicker, Entschäumer, Filmbildehilfsmittel, etc.) |

Die Formulierungen gemäß Vergleichsbeispiel 1 und Ausführungsbeispiel 1 können durch Vermischen der genannten Komponenten in den angegebenen Mengen auf an sich bekannte Weise hergestellt werden. Die Formulierung aus Vergleichsbeispiel 1 und die Formulierung aus Ausführungsbeispiel 1 wurden jeweils auf Aluminiumfolie aufgetragen und unter normalen Raumbedingungen getrocknet. Vor der Bestimmung der photokatalytischen Aktivität wurden die Proben 120 Stunden lang vorbelichtet mit einer Intensität von 10 W/m² UV-A. Die Proben wurden dabei noch alle 24 Stunden mit destilliertem Wasser befeuchtet und abgespült.

Im Falle von Vergleichsbeispiel 1 und Ausführungsbeispiel 1 erfolgte die Belichtung mit sichtbarem Licht mit einer Gesamtintensität von 36,8 W/m² im Wellenlängenbereich von 300 nm bis 800 nm. Der UV-A-Anteil (315 nm-380 nm) betrug 0,7 W/m².

Die photokatalytische Abbaurate in Vergleichsbeispiel 1 betrug 1,4 mg m⁻² h⁻¹. Dagegen lag die photokatalytische Abbaurate in Ausführungsbeispiel 1 bei 3,1 mg m⁻² h⁻¹. Die Aktivitätssteigerung ist deutlich zu erkennen. Genauer gesagt wird durch das Ersetzen von Weißpigment TiO₂ mit BaSO₄ die photokatalytischen Aktivität mehr als verdoppelt.

### Vergleichsbeispiel 2: 2K-Polyurethan-Farbe ohne BaSO₄

### Komponente A:

| | |
|---|---|
| 33,0 Gew.% | Wasser |
| 32,0 Gew.% | vernetzbares Polyacrylat (Feststoffgehalt: 50 Gew.%) |
| 12,0 Gew.% | photokatalytisches TiO₂ (Sachtleben) |
| 8,0 Gew.% | Weißpigment TiO₂ |
| 12,0 Gew.% | CaCO₃ |
| 3,0 Gew.% | übliche Additive (Netz- u. Dispergiermittel, Verdicker, Entschäumer, etc.) |

### Komponente B:

100 Gew.% Härter: aliphatisches Polyisocyanat auf Basis von Hexamethylendiisocyanat HDI

Komponenten A und B werden vor der Anwendung im Verhältnis 100 : 12 gemischt.

### Ausführungsbeispiel 2: 2K-Polyurethan - Farbe mit BaSO₄

### Komponente A:

| | |
|---|---|
| 33,0 Gew.% | Wasser |
| 32,0 Gew.% | vernetzbares Polyacrylat (Feststoffgehalt: 50 Gew.%) |
| 12,0 Gew.% | photokatalytisches TiO₂ (Sachtleben) |
| 8,0 Gew.% | Weißpigment TiO₂ |
| 12,0 Gew.% | BaSO₄ |
| 3,0 Gew.% | übliche Additive (Netz- u. Dispergiermittel, Verdicker, Entschäumer, etc.) |

### Komponente B:

100 Gew.% Härter: aliphatisches Polyisocyanat auf Basis Hexamethylendiisocyanat HDI

Komponenten A und B werden vor der Anwendung im Verhältnis 100 : 12 gemischt.

Die Komponente A aus Vergleichsbeispiel 2 und Ausführungsbeispiel 2 kann jeweils durch Vermischen der genannten Komponenten in den angegebenen Mengen auf an sich bekannte Weise hergestellt werden. Die Komponente B wird jeweils vor der Anwendung im angegebenen Mischungsverhältnis zugemischt. Die Formulierung aus Vergleichsbeispiel 2 und die Formulierung aus Ausführungsbeispiel 2 wurden jeweils auf Aluminiumfolie aufgetragen und unter normalen Raumbedingungen getrocknet. Vor der Bestimmung der photokatalytischen Aktivität wurden die Proben 120 Stunden lang vorbelichtet mit einer Intensität von 10 W/m² UV-A. Die Proben wurden dabei noch alle 24 Stunden mit destilliertem Wasser befeuchtet und abgespült.

In Vergleichsbeispiel 2 und Ausführungsbeispiel 2 erfolgte die Belichtung mit UV-Strahlung mit einer Gesamtintensität von 17,0 W/m² im Wellenlängenbereich von 300 nm bis 800 nm. Der UV-A-Anteil (315nm-380nm) betrug 6,7 W/m².

Die photokatalytische Abbaurate in Vergleichsbeispiel 2 betrug 16,2 mg m⁻²h⁻¹. Die photokatalytische Abbaurate in Ausführungsbeispiel 2 betrug im Gegensatz dazu 20,3 mg m⁻² h⁻¹. Eine Aktivitätssteigerung ist deutlich zu erkennen. Ausführungsbeispiel 2 unterscheidet sich von Vergleichsbeispiel 2 lediglich dahingehend, dass der Füllstoff CaCO₃ mit dem Füllstoff BaSO₄ ersetzt wurde.

### Ausführungsbeispiel 3: Silikonharz-Putz mit BaSO₄

| | |
|---|---|
| 11,5 Gew.% | Wasser |
| 2,5 Gew.% | Silikonharz (Feststoffgehalt: 50 Gew.%) |
| 5,5 Gew.% | Styrol-Acrylat Bindemittel (Feststoffgehalt: 50 Gew.%) |
| 6,5 Gew.% | Ethylen-Vinylester-Terpolymer Bindemittel (Feststoffgehalt: 50 Gew.%) |
| 5,0 Gew.% | photokatalytisches TiO₂ |
| 24,0 Gew.% | BaSO₄ |
| 2,0 Gew.% | Aluminiumhydroxid |
| 3,0 Gew.% | übliche Additive (Netz- u. Dispergiermittel, Verdicker, Entschäumer, Filmbildehilfsmittel, etc.) |
| 40,0 Gew.% | Struktursand |

Die Formulierung gemäß Ausführungsbeispiel 3 kann durch Vermischen der genannten Komponenten in den angegebenen Mengen auf an sich bekannte Weise hergestellt werden. Der Putz wurde auf Aluminiumfolie aufgetragen und unter normalen Raumbedingungen getrocknet. Vor der Bestimmung der photokatalytischen Aktivität wurde die Probe 120 Stunden lang vorbelichtet mit einer Intensität von 10 W/m² UV-A. Die Probe wurde dabei noch alle 24 Stunden mit destilliertem Wasser befeuchtet und abgespült.

Bei diesem Beispiel erfolgte die Belichtung mit UV-Strahlung mit einer Gesamtintensität von 17,0 W/m² im Wellenlängenbereich von 300 nm bis 800 nm. Der UV-A-Anteil (315 nm - 380 nm) betrug 6,7 W/m².

Die photokatalytische Abbaurate betrug 6,1 mg m⁻² h⁻¹. Dies ist insbesondere im Hinblick auf den relativ geringen Photokatalysator-Gehalt eine bemerkenswerte Aktivität.

## Patentansprüche

1. Beschichtungsmaterial, umfassend
(a) mindestens ein organisches Bindemittel,
(b) mindestens ein photokatalytisch wirksames Mittel und
(c) BaSO₄ als funktionellen Füllstoff, wobei der Gehalt an BaSO₄ in der Beschichtungsmasse größer oder gleich dem Gehalt an photokatalytisch wirksamen Mittel ist.

2. Beschichtungsmaterial gemäß Anspruch 1, wobei das Beschichtungsmaterial weitgehend frei, vorzugsweise frei von silikatischen Bindemitteln ist.

3. Beschichtungsmaterial gemäß Anspruch 1 oder 2, wobei der funktionelle BaSO₄ umfasst, welches als natürliches Bariumsulfat, als synthetisches Bariumsulfat oder als Mischfüllstoff, enthaltend mehr als 60 Gew.%, vorzugsweise mehr als 80 Gew.% BaSO₄, vorliegt.

4. Beschichtungsmaterial gemäß Anspruch 3, wobei der BaSO₄ enthaltende Mischfüllstoff eine Wasserlöslichkeit von weniger als 0,1 g/l bei 20°C aufweist.

5. Beschichtungsmaterial gemäß einem der vorstehenden Ansprüche, wobei das organische Bindemittel ausgewählt ist aus Polymerdispersionen, Redispergiermitteln, Polymerisaten oder Mischpolymerisaten, vorzugsweise ausgewählt ist aus Epoxidharzen, Alkydharzen, Acrylharzen, Melamin/Formaldehyd-Harzen, Silikonharzen, Silanen, Polysiloxanen, Polyacrylaten, Polymethacrylaten, Polyvinylverbindungenn, Polyurethanen, Polyethern oder Polyestern und Copolymeren oder Mischungen davon, und stärker bevorzugt ausgewählt ist aus Polymerdispersionen, enthaltend Acrylate, Styrolacrylate, Vinylacetate, Vinychloride sowie Misch- und Co-Polymere davon.

6. Beschichtungsmaterial gemäß einem der vorstehenden Ansprüche, wobei das photokatalytisch wirksame Mittel ausgewählt ist aus einem photokatalytisch wirksamen Metalloxid oder Metallsulfid, vorzugsweise Metalloxid, von Ti, Zn, Fe, Mn, Mo und/oder W, vorzugsweise mit einem Anteil von mindestens 60 Gew.%, besonders bevorzugt mindestens 80 Gew.%, insbesondere mindestens 90 Gew.%, bezogen auf die Gesamtmenge des photokatalytisch wirksamen Mittels, und wobei das photokatalytisch wirksame Mittel vorzugsweise ausgewählt ist aus Zinksulfid, Zinkoxid, Titanoxid und Mischungen davon.

7. Beschichtungsmaterial gemäß Anspruche 6, wobei das photokatalytisch wirksame Mittel aus Titandioxid, insbesondere in amorpher und/oder teilkristalliner Form, Rutil- oder Anatasform, Hydraten von Titanoxiden sowie Mischformen daraus besteht, welche vorzugsweise mit C, N und/oder S dotiert sind.

8. Beschichtungsmaterial gemäß einem der vorhergehenden Ansprüche, wobei das organische Bindemittel in einer Menge von 10 Gew.% bis 35 Gew.%, vorzugsweise 15 Gew.% bis 30 Gew.%, enthalten ist, und/oder das photokatalytisch wirksame Mittel in einer Menge von 1 Gew.% bis 15 Gew.%, vorzugsweise 3 Gew.% bis 13 Gew.%, stärker bevorzugt 5 Gew.% bis 10 Gew.%, noch stärker bevorzugt 5 Gew.% bis 7 Gew.% enthalten ist, und/oder
BaSO₄ als funktioneller Füllstoff in einer Menge von 1 Gew.% bis 70 Gew.%, vorzugsweise 3 Gew.% bis 60 Gew.%, stärker bevorzugt 5 Gew.% bis 50 Gew.%, noch stärker bevorzugt 5 Gew.% bis 40 Gew.% enthalten ist, jeweils bezogen auf den Gesamtfeststoffgehalt des Beschichtungsmaterials,
und wobei der Gehalt an BaSO₄ in der Beschichtungsmasse größer oder gleich dem Gehalt an photokatalytisch wirksamen Mittel ist, wobei stärker bevorzugt das Gewichtsverhältnis von BaSO₄ zu photokatalytisch wirksamen Mittel von 1:1 bis 5:1, vorzugsweise 1,2:1 bis 5:1 beträgt.

9. Beschichtungsmaterial gemäß einem der Ansprüche 1 bis 8, wobei das Beschichtungsmaterial eine Anstrichfarbe, insbesondere Fassadenfarbe, ein Lack, eine Lasur, eine Versiegelung, ein Schutzanstrich, eine Korrosionsschutzfarbe oder ein Putz ist, insbesondere zum Einsatz im Außenbereich.

10. Verwendung von BaSO₄ als funktionellem Füllstoff zur Steigerung der Aktivität eines photokatalytisch wirksamen Mittels in einem Beschichtungsmaterial, wobei das Beschichtungsmaterial
(a) mindestens ein organisches Bindemittel,
(b) mindestens ein photokatalytisch wirksames Mittel und
(c) BaSO₄ als funktionellen Füllstoff, umfasst.

11. Verwendung gemäß Anspruch 10 zum Abbau von in Atmosphärenluft enthaltenen Schadgasen, insbesondere volatilen organischen Verbindungen (VOC) oder Stickoxiden, wie etwa NO oder NO₂.

12. Verwendung gemäß Anspruch 11, wobei das Beschichtungsmaterial im Außenbereich eingesetzt wird.

## Claims

1. A coating material comprising
(a) at least one organic binding agent,
(b) at least one photocatalytically active agent, and
(c) BaSO₄ as functional filler, wherein the content of BaSO₄ in the coating compound is greater than or equal to the content of photocatalytically active agent.

2. The coating material according to Claim 1, wherein the coating material is largely free, preferably free, from siliceous binding agents.

3. The coating material according to Claim 1 or 2, wherein the functional filler comprises BaSO₄, which is present as natural barium sulphate, as synthetic barium sulphate, or as lactic acid filler, containing more than 60 % by weight, preferably more than 80 % by weight, of BaSO₄.

4. The coating material according to Claim 3, wherein the mixed filler containing BaSO₄ has a water solubility of less than 0.1 g/l at 20 °C.

5. The coating material according to one of the preceding claims, wherein the organic binding agent is selected from polymer dispersions, redispersing agents, polymers or mixed polymers, is preferably selected from epoxy resins, alkyd resins, acryl resins, melamine/formaldehyde resins, silicone resins, silanes, polysiloxanes, polyacrylates, polymethacrylates, polyvinyl compounds, polyurethanes, polyethers or polyesters and copolymers of mixtures thereof, and is more preferably selected from polymer dispersions, containing acrylates, styrene acrylates, vinyl acetates, vinyl chlorides and mixed polymers and copolymers thereof.

6. The coating material according to one of the preceding claims, wherein the photocatalytically active agent is selected from a photocatalytically active metal oxide or metal sulphide, preferably metal oxide, of Ti, Zn, Fe, Mn, Mo and/or W, preferably with a proportion of at least 60 % by weight, particularly preferably at least 80 % by weight, in particular at least 90 % by weight, based on the total quantity of the photocatalytically active agent, and wherein the photocatalytically active agent is preferably selected from zinc sulphide, zinc oxide, titanium oxide and mixtures thereof.

7. The coating material according to claim 6, wherein the photocatalytically active material consists of titanium dioxide, in particular in amorphous and/or partly crystalline form, rutile or anatase form, hydrates of titanium oxides, and mixed forms thereof, which are preferably doped with C, N and/or S.

8. The coating material according to one of the preceding claims, wherein the organic binding agent is contained in a quantity of 10 % by weight to 35 % by weight, preferably 15 % by weight to 30 % by weight, and/or
the photocatalytically active agent is contained in a quantity from 1 % by weight to 15 % by weight, preferably 3 % by weight to 13 % by weight, more preferably 5 % by weight to 10 % by weight, even more preferably 5 % by weight to 7 % by weight,
and/or
BaSO₄ is contained as functional filler in a quantity from 1 % by weight to 70 % by weight, preferably 3 % by weight to 60 % by weight, more preferably 5 % by weight to 50 % by weight, even more preferably 5 % by weight to 40 % by weight, in each case based on the total solid content of the coating material,
and wherein the content of BaSO₄ in the coating is greater than or equal to the content of photocatalytically active agent, wherein the ratio by weight of BaSO₄ to photocatalytically active agent is from 1:1 to 5:1, preferably 1.2:1 to 5:1.

9. The coating material according to one of Claims 1 to 8, wherein the coating material is a paint, in particular house paint, a lacquer, a glaze, a sealant, a protective coating, an anti-corrosion paint or a plaster, in particular for use outdoors.

10. Use of BaSO₄ as a functional filler for increasing the activity of a photocatalytically active agent in a coating material, wherein the coating material comprises
(a) at least one organic binding agent,
(b) at least one photocatalytically active agent, and
(c) BaSO₄ as functional filler.

11. The use according to Claim 10 for degrading harmful gases contained in atmospheric air, in particular volatile organic compounds (VOCs) or nitrogen oxides, such as NO or NO₂.

12. The use according to Claim 11, wherein the coating material is used outdoors.

## Revendications

1. Matériau de revêtement, comprenant
(a) au moins un liant organique,
(b) au moins un agent à action photocatalytique, et
(c) du BaSO₄ en tant que charge fonctionnelle, la teneur en BaSO₄ dans la masse de revêtement étant supérieure ou égale à la teneur de l'agent à action photocatalytique.

2. Matériau de revêtement selon la revendication 1, ledit matériau de revêtement étant quasiment exempt, préférentiellement totalement exempt, de liants de type silicate.

3. Matériau de revêtement selon la revendication 1 ou 2, le composant fonctionnel comprenant du BaSO₄ lequel se présente sous forme de sulfate de baryum naturel, de sulfate de baryum synthétique ou d'une charge mélangée, contenant plus de 60 % en poids, de préférence plus de 80 % en poids, de BaSO₄.

4. Matériau de revêtement selon la revendication 3, la solubilité dans l'eau de la charge mélangée, laquelle contient du BaSO₄, étant inférieure à 0,1 g/l à 20 °C.

5. Matériau de revêtement selon l'une des revendications précédentes, le liant organique étant choisi parmi les dispersions de polymères, les agents de redispersion, les polymères ou les mélanges de polymères, choisis préférentiellement parmi les résines époxy, les résines alkyde, les résines acryliques, les résines mélamine/formaldéhyde, les résines de silicone, les silanes, les polysiloxanes, les polyacrylates, les polyméthacrylates, les composés polyvinyliques, les polyuréthanes, les polyéthers ou polyesters et parmi leurs copolymères ou mélanges, et choisis avec une préférence particulière parmi les dispersions de polymères contenant des acrylates, des acrylates de styrène, des acétates de vinyle, des chlorures de vinyle ainsi que parmi leurs polymères mélangés et copolymères.

6. Matériau de revêtement selon l'une des revendications précédentes, l'agent à action photocatalytique étant choisi parmi un oxyde de métal ou sulfure de métal à action photocatalytique, s'agissant préférentiellement d'un oxyde de métal, à savoir de Ti, Zn, Fe, Mn, Mo et/ou W, dont la proportion est supérieure ou égale à 60 % en poids, avec une préférence particulière supérieure ou égale à 80 % en poids, notamment supérieure ou égale à 90 % en poids, par rapport à la quantité totale de l'agent à action photocatalytique, et l'agent à action photocatalytique étant préférentiellement choisi parmi le sulfure de zinc, l'oxyde de zinc, l'oxyde de titane et leurs mélanges.

7. Matériau de revêtement selon la revendication 6, l'agent à action photocatalytique étant constitué de dioxyde de titane, notamment dans sa forme amorphe et/ou partiellement cristalline, sa forme de rutile ou d'anatase, d'hydrates d'oxyde de titane ainsi que de leurs formes mélangées, ces constituants étant préférentiellement dopés au C, N et/ou S.

8. Matériau de revêtement selon l'une des revendications précédentes, le liant organique y étant contenu dans une quantité comprise entre 10 % en poids et 35 % en poids, de préférence entre 15 % en poids et 30 % en poids, et/ou l'agent à action photocatalytique y étant contenu dans une quantité comprise entre 1 % en poids et 15 % en poids, de préférence entre 3 % en poids et 13 % en poids, d'une manière plus préférée entre 5 % en poids et 10 % en poids, d'une manière encore plus préférée entre 5 % en poids et 7 % en poids,
et/ou
le BaSO₄ y étant contenu en tant que charge fonctionnelle dans une quantité comprise entre 1 % en poids et 70 % en poids, de préférence entre 3 % en poids et 60 % en poids, d'une manière plus préférée entre 5 % en poids et 50 % en poids, et d'une manière encore plus préférée entre 5 % en poids et 40 % en poids, toujours par rapport à la teneur totale en matières solides du matériau de revêtement,
et la teneur en BaSO₄ dans la masse de revêtement étant supérieure ou égale à la teneur en agent à action photocatalytique, le rapport pondéral entre le BaSO₄ et l'agent à action photocatalytique étant d'une manière plus préférée compris entre 1 : 1 et 5 : 1, de préférence entre 1,2 : 1 et 5 : 1.

9. Matériau de revêtement selon l'une des revendications 1 à 8, le matériau de revêtement étant une peinture, notamment une peinture pour façades, un vernis, une lasure, un agent de vitrification, une peinture de protection, une peinture anti-corrosion ou un crépi, destiné(e) notamment à une utilisation extérieure.

10. Utilisation de BaSO₄ en tant que charge fonctionnelle destinée à augmenter l'activité d'un agent à action photocatalytique au sein d'un matériau de revêtement, le matériau de revêtement comprenant
(a) au moins un liant organique,
(b) au moins un agent à action photocatalytique, et
(c) du BaSO₄ en tant que charge fonctionnelle.

11. Utilisation selon la revendication 10 pour éliminer des gaz nocifs contenus dans l'air ambiant, notamment des composés organiques volatils (COV) ou des oxydes d'azote tels que le NO ou le NO₂.

12. Utilisation selon la revendication 11, le matériau de revêtement étant utilisé à l'extérieur.
